# EUROPEAN PATENT SPECIFICATION

(11) **EP 3 521 724 B1**
(45) Date of publication and mention of the grant of the patent: **05.03.2025**
(21) Application number: 19154361.0
(22) Date of filing: 29.01.2019
(51) Int. Cl.: F24F 11/80, F24F 110/10, F24F 110/20, F24F 110/70, F24F 110/66, G05D 23/19

(54) **CONTROLLER AND ROOM CONDITIONING SYSTEM**
REGLER UND RAUMKONDITIONIERUNGSSYSTEM
ORGANE DE COMMANDE ET SYSTÈME DE CONDITIONNEMENT DE PIÈCES

(30) Priority: 01.02.2018 BE 201805061
(43) Date of publication of application: 07.08.2019
(73) Proprietor: Niko NV, 9100 Sint-Niklaas (BE)
(72) Inventor: DE BRABANDER, Gino, 9112 Sinaai (BE)
(74) Representative: Calysta NV

(56) References cited:
- EP-A2- 1 856 454
- US-A1- 2009 283 603
- US-A1- 2015 130 631
- US-A1- 2015 323 941
- US-A1- 2016 209 063
- US-A1- 2018 299 153
- US-B2- 8 356 760

## Description

### Field of the invention

The present invention relates to the field of conditioning systems. More specifically, it relates to devices and systems, and to methods, for controlling the temperature of a location, e.g. a room.

### Background of the invention

Thermostats, and in general controllers for setting a predetermined temperature at a location, usually comprise a regulator which allows a user to set a desired minimum temperature, or a range of temperatures within which the location should be brought and/or kept. It also comprises a temperature sensor, means to compare the temperature measured by the sensor with the temperature set by the user, and means to adjust the temperature at the location so it does not drop below the value or values set by the user, for example by controlling the activation of a heating system using a control unit. Ideally, temperature control at a location, such as in a room, is only performed when needed, e.g. when a given location, such as a room, is being occupied. In order to provide this, many thermostats include scheduled heating which can be set by the user. The occupancy of the room has to adapt to the schedule, or if there is occupancy during a period in which it is not scheduled, the thermostat has to be manually controlled in order to reach a comfort temperature.

Other thermostats include one or more extra sensors, such as passive infrared (PIR) sensors, which detect the presence of a person at a location, e.g. in a room. These sensors are not very reliable, and their inclusion in the thermostat increases the complexity of the system.

Document US20150323941A1 discloses an improved thermostat including temperature control and sensing and control of other environmental parameters such as air exchanging, humidifying and dehumidifying, and filtration.

Moreover, the apparent temperature does not necessarily correspond to the temperature set by the user. The apparent temperature may fluctuate depending on weather and environmental conditions, and a same temperature may be considered too high or too low, even during a same day, depending on variation of external factors. Moreover, different zones of a location may be at different temperatures, for example depending on the proximity of a source of heat such as a heater or a window in a sunny day. In order to improve temperature detection, several temperature sensors can be distributed along a room, but as with the presence detector, this solution increases complexity of the system.

Document US20160209063A1 discloses a management system based on detected signals in order to conserve power of an air conditioner, where operational conditions are compared to actual temperature during a week. If there is a difference during more than a threshold of days in the week, taking into account power consumption limitations, the operational conditions are varied to fit better with the actual use.

Document US20090283603A1 discloses an HVAC system including sensors to sense the environment of a room and/or the duct of the HVAC system. In order to improve temperature sensing, the sensor is arranged so it can sense the air circulating through the duct of the HVAC, but the sensor itself is not positioned within the duct.

Document WO2006099337A2 discloses an air quality monitoring system. It includes sampling inlets and tubing for sampling air from several areas of, for example, a building. It allows improving the accuracy of measurements of relative humidity, enthalpy, etc. by obtaining the temperature near the sampling inlet of the tubing.

It is an object of embodiments of the present invention to provide a temperature controller, a room conditioning system and a method for controlling the temperature, based on the use of a temperature sensing means and a gas sensing means included in a temperature controller. The present invention is adapted to provide a comfortable temperature which takes into account other environmental parameters than only the sensed temperature, particularly parameters related to air quality and breathability.

The invention provides a temperature controller according to claim 1.

It is an advantage of embodiments of the present invention that the apparent temperature, which is different for different concentrations of the gas, can be taken into account during temperature conditioning.

It is an advantage of embodiments of the present invention that gases generated by biological activity can be detected, and taken into account in the temperature control. It is a further advantage that the sensor can include presence detection with no need of further sensors.

In some embodiments of the present invention, the controller comprises humidity sensing means, and the temperature regulator is further adapted to tune the target temperature value in accordance with the output of the humidity sensing means.

It is an advantage of embodiments of the present invention that the apparent temperature can be very accurately determined by taking into account the dryness or humidity of the environment at the location.

In a further aspect, the present invention provides a room conditioning system comprising a temperature controller in accordance with embodiments of the first aspect, further comprising environmental control means (such as a heating, cooling, and/or ventilation systems).

It is an advantage of embodiments of the present invention that adapted and comfortable room conditioning can be obtained, taking into account the apparent temperature.

The invention further provides a method for controlling an environmental condition at a location according to claim 4.

It is an advantage of embodiments of the present invention that the method provides comfortable room conditioning, taking into account the apparent temperature, which depends on the concentration of the predetermined gas, e.g. CO₂.

In some embodiments of the present invention, the method includes defining a range of predetermined temperatures. In such case, setting the target temperature value comprises setting the target temperature value based on the defined range of predetermined temperatures.

It is an advantage of embodiments of the present invention that the method provides control of the temperatures on which the target temperature will be based.

In some embodiments of the present invention, the method comprises sensing humidity and comparing the humidity level with a predetermined humidity range.

It is an advantage of embodiments of the present invention that the humidity can be taken into account for obtaining the target temperature value.

In some embodiments of the present invention, the method comprises starting the process, for example automatically, when an increase of the concentration of the predetermined gas is detected.

It is an advantage of embodiments of the present invention that the implementation can save energy, by allowing the gas sensor detecting presence of a person.

The invention further provides a use of at least one gas sensing means in a thermostat according to claim 8.

Preferred aspects of the invention are set out in the accompanying dependent claims.

These and other aspects of the invention will be apparent from and elucidated with reference to the embodiment(s) described hereinafter.

### Brief description of the drawings

FIG 1 and FIG 2 illustrate two temperature controllers in accordance with different embodiments of the present invention.
FIG 3 illustrates a room conditioning system in accordance with embodiments of the second aspect of the present invention.
FIG 4 shows a flowchart, including optional steps, of a method in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment.

Where in embodiments of the present invention reference is made to "regulator", reference is made to any regulating means (temperature regulating means, in the context of the present invention) which controls the activation and/or deactivation of a device in order to regulate a parameter (the temperature, in the context of the present invention), based on at least one input. Typically, a regulator includes signal inputs for providing information regarding the status of the parameter to regulate, and controlling means such as a control unit in order to control de activation or deactivation of the device which causes the parameter (e.g. the temperature) to change, either directly or indirectly (e.g. it may activate a heating system, it may open or close blinds, activate an air conditioning system, etc.). It may include electronic elements such as drivers, signal outputs, instruction lines, software, etc.

A particular type of regulator is a temperature controller, which is an adjustable regulator which allows setting predetermined conditions for the temperature, such as a minimum temperature or a range of temperatures. The temperature controllers usually include a temperature sensor. When the sensed temperature at the location, e.g. in the room, does not fit the predetermined conditions, the control means of the temperature controller activates the device which can change the parameter, in this case the temperature at the location, e.g. in the room.

Reference is made in this document to different magnitudes related to temperature. The "sensed temperature" is the value of temperature at a location measured by a temperature sensor. The "temperature set by the user", or "predetermined temperature", is the desired value of temperature typically introduced in a regulator by the user. There typically is a "predetermined temperature range" around the predetermined temperature, outside of which the regulator starts regulating the temperature. For instance, if the sensed temperature drops 0.5° below the predetermined temperature, the regulator may start heating the location. The "apparent temperature" is the temperature actually felt by the user, which is influenced by other conditions, such as presence of gases and/or breathability, speed of air, etc. The present invention sets a "target temperature" (or a range of temperatures), which may be higher or lower than the "predetermined temperature", based on the sensed temperature and on the sensed further conditions.

In the present invention, rather than merely comparing the "predetermined temperature" with the "sensed temperature", the "target temperature" is compared with the "sensed temperature", and the temperature of the location is regulated accordingly, to optimize comfort.

In a first aspect, the present invention relates to a temperature controller which not only includes means for temperature sensing, but also means for sensing other suitable environmental parameters which affect the perceived or apparent temperature.

According to the present invention, the temperature controller includes means for sensing the concentration of one or more gases, such as carbon dioxide, and/or volatile organic compounds (VOCs). It may include means for sensing further environmental parameters, such as humidity.

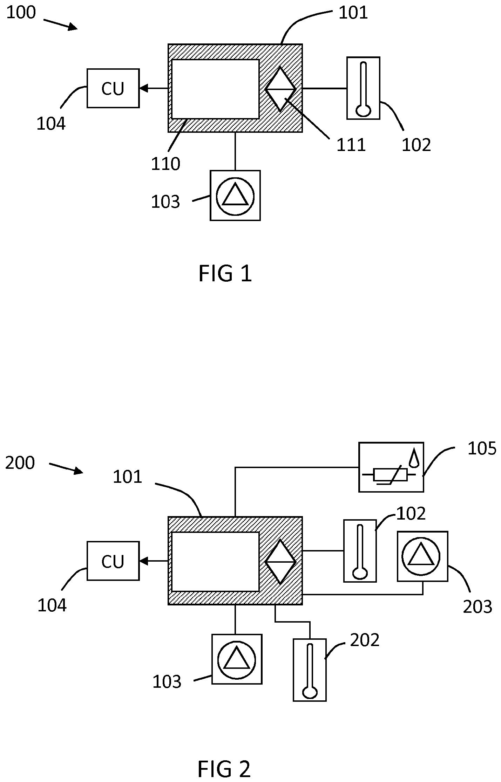

FIG 1 shows a temperature controller 100, for example a thermostat, in accordance with embodiments of the present invention. It includes an adjustable regulator 101 for setting the temperature to a predetermined value, determined by the user. The regulator may include signal processing means to process input signals from sensors.

The temperature controller 100 includes temperature sensing means 102, for example at least one temperature sensor providing an input of the environmental temperature to the regulator. This can be done periodically, continuously, or under certain circumstances (for example at a predetermined scheduled time or period). Additionally, or alternatively, the regulator 101 may be adapted to pull the information from the temperature sensing means 102 when required.

The temperature controller 100 includes a further sensing means 103 for measuring concentration of a gas, preferably a gas whose presence affects the apparent temperature in the location. This can also be done periodically, under schedule, etc., as in the case of the measurements by the temperature sensing means 102. Measurement of temperature and measurement of gas, however, do not need to be performed both at the same time nor according to a same or similar schedule. The further sensing means 103 provides a further input of environmental conditions to the regulator 101. The reading of the further sensing means 103 is used to tune the temperature control provided by the temperature controller 100. For example, the signal provided by the further sensing means 103 can be used by the regulator 101 to re-calibrate the temperature sensing means 102, or to re-adjust the temperature set by the user. In some embodiments, for a given predetermined range of temperatures set by the temperature controller, the input from the temperature sensing means 102 gives a first indication of the temperature at the location, but the input from the further sensing means 103 indicates the quality of the air, for example its breathability, which affects the apparent temperature at the location. In preferred embodiments of the present invention, the further sensing means 103 includes a gas sensor for sensing gases resulting from biological activity such as transpiration or breathing, such as a carbon dioxide (CO₂) sensor, a VOC sensor or any other suitable sensor. The output of the further sensing means 103 can be used to correct or finely tune the temperature regulation.

The temperature controller 100 is adapted to provide a signal to heating and/or cooling systems, or in general to environmental conditioning systems, in order to provide a range of target values of temperature within a predetermined range around the temperature set by the user. In embodiments of the present invention, this range of target values of temperature (or target temperature range) can be tuned in accordance with the measurement obtained by the further sensing means 103. Although the temperature measured by a temperature sensing means 102 may be within the predetermined range around the value set by a user, the predetermined range around the value set by the user may not provide the highest comfort due to other factors such as CO₂ concentration, so the target temperature range can be adapted accordingly in order to provide a temperature which gives high comfort to the user. Thus, auto-calibration is obtained easily, without the need of using many sensors distributed over a location, e.g. over a room.

In some embodiments of the present invention, the temperature controller may include a control unit 104, including means such as hardware, drivers, and/or software for activating or deactivating an environmental conditioning system (such as a heating system, an air conditioning system, a ventilation system, etc.). The control unit 104 may be linked to, or be part of, the regulator 101. In some embodiments, the control unit 104 may be adapted to control a ventilation system. This allows also tailoring the concentration of CO₂ and/or VOC by providing ventilation if the concentration surpasses a predetermined threshold which may be set during manufacture, taking into account for example safety norms, or the maximum value that the target temperature can be adapted.

In some embodiments of the present invention, the regulator 101 includes feedback means 110 such as a display, and an interface 111 for setting the desired temperature. The feedback means 110, e.g. display, can help visualizing the set temperature, and/or the sensed temperature, and/or the temperature correction provided by the further sensing means 103, e.g. gas sensor, and/or gas concentration or any other information relevant for the functioning of the temperature controller, such as a heating schedule, alert messages such as low battery status, status of the heating system, etc. The feedback means 110 may also include an alert system, such as a visual or acoustic alert, for example for indicating presence of toxic gases such as CO, malfunction of elements of the temperature controller 100 or of at least part of the environmental conditioning system, etc.

In some embodiments of the present invention, the temperature sensing means 102 may comprise a thermometer, a thermistor, a thermocouple, or any other suitable sensor. It can be advantageously placed in thermal contact with the location where temperature is to be sensed, thus improving accuracy. In some embodiments, the temperature sensing means includes more than one temperature sensor, for example several sensors distributed over different spots of the location.

In some embodiments, the temperature sensing means 102 and/or the further sensing means 103 and/or the control unit 104 are part of a compact or integrated unit including the regulator 101.

Some of the effects of the present invention are explained in the following two exemplary situations.

In a first exemplary situation, a temperature sensing means 102 senses a room temperature at a location, e.g. in a room, with high levels of CO₂. The levels of CO₂ may give a numbing feeling, which is only worsened by maintaining a high temperature. These high levels are detected by the further sensing means 103, in this example a CO₂ sensor, and the sensed temperature signal and the sensed CO₂ signal are sent to the regulator 101. Thus, the temperature controller would tune the predetermined range of temperatures to lower target values than the ones determined by the predetermined range around the temperature set by the user, for example by tuning the temperature to a value typically up to 5% lower than the predetermined temperature set by the user. The control unit 104 may activate the environmental control systems in accordance with the thus adapted target values, rather than the predetermined values in the range around the value set by the user. This increases the comfort of the heating. Analogously, detection of high levels of VOC have a similar effect; high levels of VOC combined with a temperature set in the temperature controller may result in a lesser comfort than if the same temperature were set for low levels of VOC.

In a second exemplary situation, under the same room temperature as the first example, low CO₂ or VOC concentration would result in a fresh and more breathable environment, and the apparent temperature may be lower than in the first example, so the temperature controller would adjust the temperature of the room accordingly, for example by tuning the predetermined range of temperatures around the value set by the user to higher values, for example a value up to 5% higher than the value set by the user.

Additionally, the CO₂ and /or VOC levels in the environment can be an indicator of physical activity linked to the breathing rate, or it may be an indicator of the level of occupancy in a room. In both cases (variation of physical activity or variation of occupancy), there may be a change of temperature, but usually temperature sensors do not detect this variation fast enough. However, one or more CO₂ or VOC sensors can detect fluctuation of presence of breathing subjects or of physical activity faster than temperature sensors. This can be used for example to complement temperature detection, so the regulator can anticipate an upcoming variation of the temperature at the location, e.g. in the room, and adapt faster (e.g. by adjusting the temperature earlier) than if the regulator would only have an input from temperature sensing means.

The present invention may improve energy savings. In general, a location needs to have its temperature controlled only while the location is being occupied. Typically, occupancy is detected by one or more PIR sensors, which may also be used to track the position of the subject in a location (e.g. to reduce double detections and other reliability problems). When the location is being occupied, an occupancy sensor may send an activation signal to the temperature controller, which subsequently turns on to control the temperature, and the temperature of the location may be varied if required. In embodiments of the present invention, the gas sensor can be adapted to be used as an occupancy sensor, which can be used as an addition or an alternative to PIR sensors. For example, there may be no need to include multiple PIR sensors in order to detect presence of subjects, which may improve reliability.

However, the present invention is not limited to measuring CO₂ or VOC, and other gases could be measured additionally, such as for instance carbon monoxide (CO). A further alarm may be included in the device, indicating presence or high levels of CO.

In general, the present invention is not limited to means for measuring gases related to or resulting from biological activity. Other environmental parameters can be measured, preferably parameters which affect apparent temperature, usually linked to air quality and breathability, the present invention not being limited thereto, and other parameters may be included in the measurement, such as air speed for instance due to ventilation. FIG 2 shows a temperature controller 200 including humidity sensing means 105, for example for measuring relative humidity of the air. The level of humidity affects the apparent temperature, with high levels of humidity making the apparent temperature more extreme (higher or lower) than the actual temperature, which affects the apparent temperature. In some embodiments, the humidity sensing means 105 may comprise a humistor, for example a variable resistor whose resistivity changes with changes in the humidity of the surrounding air. Any other humidity sensing means can be used. For example, capacitive sensing techniques can be used, such as CMOS-based humidity sensing means.

The present invention is not limited to one sensor of each type. For example, several sensors may be distributed over a location, for example several temperature sensors may be distributed over a room, and a gas detector (e.g. CO₂ sensor) is included. The particular locations can be chosen according to the type of sensor, and may be along surfaces, and/or distributed in height. For example, depending on the included gas sensor, the sensor or sensors may be positioned closer to ground, or close to or at the ceiling. In the particular embodiment shown in FIG 2, the temperature controller 200 includes a first temperature sensing means 102 and a second temperature sensing means 202, and a first further sensing means 103 and a second further sensing means 203. The two (or more) further sensing means 103, 203 may be used to measure concentration of different types, or the same type, of gas (CO₂, VOC). The temperature sensor or sensors may be distributed over the location, together in the same or adjacent spots as the further sensing means (gas sensors). The distribution of the sensors may be optimized for a particular location. Thus, temperature gradients and gradients of other environmental parameters (e.g. CO₂ concentration) may also be measured.

In some embodiments, more than one humidity sensor may be included. In some embodiments, humidity and temperature can be measured using the same integrated device.

The present invention may include other sensors in the temperature controller. For example, daylight detectors can be included, which can anticipate an increase of the location temperature, so the target temperature can be adapted (e.g. lowered, if a lot of solar irradiation is detected) taking into account the daylight measurement, in addition to the gas measurement. For example, presence or occupancy detectors may be included if needed, for activating the temperature sensor (if no presence detecting functionality is implemented via a CO₂ or VOC sensor, for example, or if implemented but a redundant detection is considered necessary).

The regulator and the different sensors may be included in the same integrated temperature controller, forming a compact device. For example, a single unit may include a temperature sensor, a humidity sensor, a gas sensor and the temperature regulator included in the same package, which may be adapted to be compatible with socket standards (e.g. the Belgian standard NBN C 61 - 670, or in general compatible with sockets of 45x45mm) and wall-mounted light switch standards. Thus, such single unit can be easily mounted on or inside a wall.

In some embodiments of the present invention, the temperature controller can control the local temperature at the location where the temperature is sensed, via a control unit including any suitable hardware and software, driver, etc. For example, the location may be the entire floor of a building, or it may be only a room, or the cabin of a truck, ship or plane, the interior of a car, etc. The resulting corrected heating optimizes the temperature adjustment for highest comfort, based on the conditions of the location (such as occupation or ventilation) and of the subjects therein which affect apparent temperature (and in some cases also air quality), not only based on the temperature set by a user. These conditions are monitored by a temperature sensor and at least a further sensor, such as a CO₂ and/or a VOC sensor.

In a further aspect, a room conditioning system is described, including the temperature controller of embodiments of the first aspect, and further including means to control environmental parameters of the location, for example at least the temperature of a location. For example, in accordance with embodiments of the second aspect, the temperature controller may be operationally connected to a heating device such as at least one radiator, a floor heating device, etc., and preferably to at least one heating device associated to the location in which the temperature sensing means of the temperature controller senses the environmental parameters, allowing tailoring the heating needed at a given location in accordance with the apparent temperature, and optionally with the occupants, number thereof, etc. However, this is not limiting, and in embodiments of the present invention the temperature controller may be linked to a central heating device.

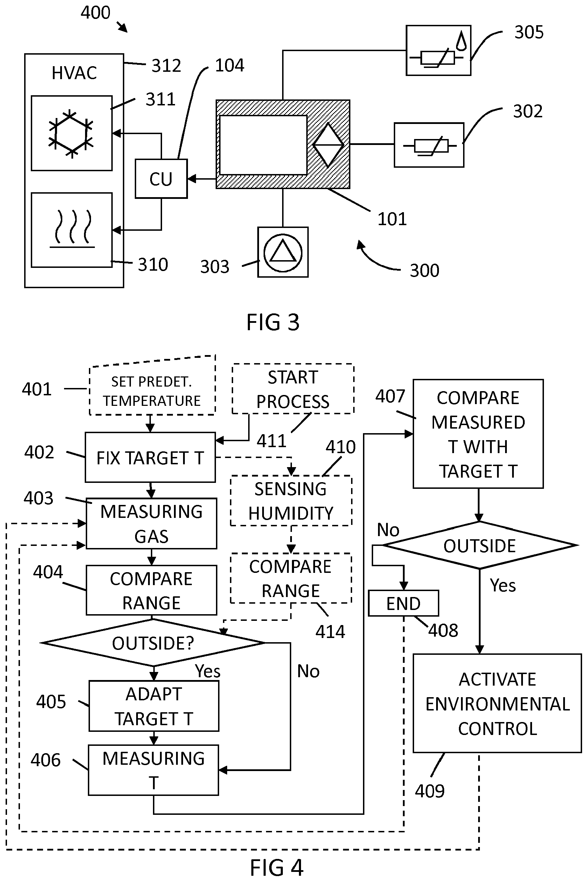

FIG 3 shows an exemplary room conditioning system 400 in accordance with embodiments of the present invention. It includes a temperature controller 300, for example including a temperature sensor such as a thermistor 302, a gas sensor such as a CO₂ sensor 303 and a humidity sensor such as a humistor 305, for each measuring particular environmental parameters and sending the corresponding measurement to the regulator 101. In some embodiments, the humistor 305 may also measure the temperature.

The room conditioning system may include a control unit 104 connected to further means 310, 311, 312 for controlling at least one environmental parameter such as (but not limited to) temperature. For example, the control unit 104 may be adapted to send signals to a heating system 310 and/or a cooling system 311. It may alternatively or additionally be adapted to control ventilation of the particular location where the temperature controller is installed. Optionally, the control unit 104 may be adapted to control a heating, ventilation and air conditioning (HVAC) system 312. The system is not limited to direct heating, cooling and ventilation control, and it may control other systems such as deployment of blinds or rolling canopies, etc. Thus, the system may not be limited to just increasing and/or decreasing the temperature directly.

In a further aspect, a method for controlling an environmental condition of a location is provided. FIG 4 shows a flowchart with steps of the method in accordance with embodiments of the present invention, including optional features illustrated in dashed lines. The method includes setting 402 a target temperature for that location, for example a temperature at which the location should be, in order to provide comfort. It includes measuring 406 the temperature and measuring 403 the concentration of at least one gas, for example a gas that affects the perception of temperature, for example a gas resulting from biological activity, which is VOC or CO₂, the present invention being limited thereto. The measured concentration value of the gas is compared 404 with a predetermined threshold or acceptable range of concentration for ensuring high comfort. The method includes adapting 405 the target temperature in accordance with the sensed gas concentration, if the measured concentration of the gas is higher than the predetermined threshold or outside the acceptable range. If the measured concentration of the gas is below the predetermined threshold or within the acceptable range, the target temperature is not changed.

Then the sensed temperature is compared 407 with the target temperature, either the first fixed target temperature or the in step 405 corrected target temperature. If the sensed temperature differs more than a predetermined error margin from the target temperature, the environmental control means is activated 409, otherwise (if the sensed temperature falls does not differ more that the predetermined error margin from the target temperature) it is not activated, and the process ends 408. As can be seen, target temperature may coincide or not with the temperature set by the user, depending on the concentration of gas present at the location.

The method may include defining 401 a predetermined temperature, which is usually done by the user, for example by manually introducing the desired temperature in a regulator through its interface. The method may include fixing 402 a target temperature, which in first instance may be equal to the predetermined temperature, or which may be higher or lower that the predetermined temperature, for instance based on anticipated usage of a room at a particular time of the day. The target temperature is the temperature towards which the regulation will be done. This fixing 402 of the target temperature can be done by software, for example in a processing unit included in the regulator 101. The fixing 402 of the target temperature can for instance make use of a look-up table or similar.

In some embodiments, measuring 406 the temperature is performed after, or before, measuring 403 the gas, or simultaneously to it. In order to obtain good control, the temperature and gas measurement should take less time than the variation of the environmental temperature.

If the result of the gas measurement falls outside an acceptable range for comfort, the target temperature can be adapted 405 accordingly, e.g. set higher or lower, such that if the temperature is regulated towards the target temperature, the user gets a feeling of comfort.

Additionally, if the gas concentration is higher than a predetermined "safe" value, for example CO₂ concentration higher than 800 ppm, a warning may also be issued and/or ventilation means may be activated. The safe values may be set by the manufacturer, for example.

The method may optionally further comprise sensing or measuring 410 further gas concentrations or humidity levels, comparing 414 the further gas concentrations or humidity levels with a predetermined further gas concentration or humidity level threshold or range, and including these readings in the step of adapting 405 the target temperature, if the combined results of humidity level and gas concentration measurements are outside a comfort range for the predetermined target temperature. Adapting the target temperature (e.g. by adjusting the predetermined target temperature set by the user, or by re-calibrating the temperature sensor, or by any other suitable means) is done so the target temperature, under the particular circumstances of gas or water vapor concentration (apparent temperature) sensed by the sensors of the controller, still provides comfort. For example, measuring 403 the gas and measuring 410 the humidity levels may be done simultaneously, and both results may be used to adapt the target temperature if needed.

The method according to embodiments of the present invention may comprise choosing a predetermined range of gas concentration or humidity level for a given target temperature, and comparing 404, 414 the results of the gas concentration, and optionally further gas or humidity level measurement with the chosen range. These ranges may be stored in a lookup table and/or implemented in the regulator, e.g. in a processing unit and/or in a memory unit.

In some embodiments of the present invention, adapting the target temperature may be done via software included in the regulator 101, by adapting the target temperature to a value different from the temperature set by the user or from a previous target temperature, or by recalibration of the temperature sensor to a tuned target temperature. For this, in some embodiments, the regulator 101 may include hardware and software components for comparing the sensed temperature with the target temperature, which may be the same as the predetermined temperature set by the user, or a value corrected by the regulator itself, based on the measurements by at least one or more gas sensors, optionally also with one or more humidity sensors. If the sensed temperature differs more than a predetermined error margin from the target temperature, the regulator sends a notification to the control unit 104 so the control unit 104 activates 409 environmental control means.

Activating 409 environmental control means may include any of, or any combination of, controlling (e.g. activating or deactivating) heating, cooling, ventilation, systems for providing shade, etc.

In some embodiments, the step of activating 409 the environmental control means is performed by the control unit 104, which may for example activate a heating device or system 310 or cooling device or system 311 in order to adapt the temperature of the location to a temperature within an error margin from the target temperature.

The method according to embodiments of the present invention may be recursive, for example the temperature may be sensed continuously or periodically, as well as the gas concentration. The activation of the method may be performed only during occupancy of the location where the room conditioning is desired. Occupancy, in turn, may be detected by the gas sensor, e.g. by fluctuation of a gas such as VOC or CO₂. Thus, the gas sensor may have the additional function of sending the signal to the regulator (e.g. pushing the signal) for starting 411 the process (by fixing the target temperature, for example based on the predetermined range of temperatures set by a user) when an increase of the predetermined gas is detected.

In a further aspect, the invention includes the use of at least one gas sensing means (103, 203, 303) in a thermostat comprising at least one temperature sensing means (102, 202, 302), the thermostat adapted to tune a target temperature value to which a temperature is to be regulated, the tuning being based on the measurement of gas concentration obtained by the gas sensing means (103, 203, 303) comprising at least one of a carbon dioxide sensor, and/or a VOC sensor.

## Claims

1. A temperature controller (100, 200, 300) comprising a temperature regulator (101) and temperature sensing means (102, 202, 302), the temperature regulator (101) being an adjustable regulator for setting a predetermined temperature value, the temperature regulator being adapted to regulate the temperature at a location towards a target temperature value taking into account the value of the temperature sensed by the temperature sensing means (102, 202, 302), the temperature controller comprising further sensing means (103, 203, 303) for detecting gas comprising at least one of a carbon dioxide sensor, and/or a VOC sensor,
**characterized in that** the temperature regulator (101) is further adapted to tune the predetermined temperature value to the target temperature value in accordance with the output of the further sensing means (103, 203, 303) for detecting gas.

2. The temperature controller according to any of the previous claims, further comprising humidity sensing means (105), the temperature regulator (101) being further adapted to tune the target temperature value in accordance with the output of the humidity sensing means (105).

3. A room conditioning system (400) comprising a temperature controller (100, 200, 300) in accordance with any of the previous claims, further comprising environmental control means (310, 311, 312).

4. A method for controlling an environmental condition at a location, the method comprising
- setting (402) a predetermined temperature value, and fixing a target temperature value based on the predetermined temperature value
- measuring (403) a concentration of a predetermined gas being carbon dioxide or VOC,
- comparing (404) the measured gas concentration with a threshold or with a predetermined range of gas concentrations,
- sensing (406) the temperature,
- comparing (407) the sensed temperature with the target temperature value, and
- activating (409) environmental control means if the sensed temperature differs more than a predetermined error margin from the target temperature value, **characterized in that** the method further comprises:
- adapting (405) the target temperature value if the measured gas concentration is higher than the threshold value or does not comply with the range before comparing (407) the sensed temperature with the target temperature value.

5. The method of claim 4, further comprising defining (401) a range of predetermined temperatures, and wherein setting (402) the target temperature value comprises setting (402) the target temperature value based on the defined range of predetermined temperatures.

6. The method of claims 4 or 5, further comprising sensing (410) humidity and comparing (414) the humidity level with a predetermined humidity range.

7. The method of any of claims 4 to 6, further comprising starting (411) the process when an increase of the concentration of the predetermined gas is detected.

8. Use of at least one gas sensing means (103, 203, 303) in a thermostat comprising at least one temperature sensing means (102, 202, 302), the thermostat adapted to tune a target temperature value to which a temperature is to be regulated, the tuning being based on the measurement of gas concentration obtained by the gas sensing means (103, 203, 303) comprising at least one of a carbon dioxide sensor, and/or a VOC sensor.

## Patentansprüche

1. Temperatursteuervorrichtung (100, 200, 300), umfassend einen Temperaturregler (101) und Temperaturerfassungsmittel (102, 202, 302), wobei der Temperaturregler (101) ein anpassbarer Regler zum Einstellen eines vorbestimmten Temperaturwerts ist, wobei der Temperaturregler angepasst ist, um die Temperatur an einem Ort in Richtung eines Zieltemperaturwerts zu regeln, wobei der Wert der Temperatur, die durch die Temperaturerfassungsmittel (102, 202, 302) erfasst wird, berücksichtig wird, wobei die Steuervorrichtung weitere Erfassungsmittel (103, 203, 303) zum Erkennen von Gas umfasst, die wenigstens einen Kohlendioxidsensor und/oder einen VOC-Sensor umfassen, **dadurch gekennzeichnet, dass** der Temperaturregler (101) ferner angepasst ist, um den vorbestimmten Temperaturwert in Übereinstimmung mit der Ausgabe der weiteren Erfassungsmittel (103, 203, 303) zum Erkennen von Gas auf den Zieltemperaturwert abzustimmen.

2. Temperatursteuervorrichtung nach einem der vorhergehenden Ansprüche, ferner umfassend ein Feuchtigkeitserfassungsmittel (105), wobei der Temperaturregler (101) ferner angepasst ist, um den Zieltemperaturwert in Übereinstimmung mit der Ausgabe des Feuchtigkeitserfassungsmittels (105) abzustimmen.

3. Raumklimatisierungssystem (400), umfassend eine Temperatursteuervorrichtung (100, 200, 300) nach einem der vorhergehenden Ansprüche, ferner umfassend Umgebungssteuermittel (310, 311, 312).

4. Verfahren zum Steuern einer Umgebungsbedingung an einem Ort, wobei das Verfahren umfasst:
- Einstellen (402) eines vorbestimmten Temperaturwerts und Festlegen eines Zieltemperaturwerts auf Grundlage des vorbestimmten Temperaturwerts
- Messen (403) einer Konzentration eines vorbestimmten Gases, das Kohlendioxid oder VOC ist,
- Vergleichen (404) der gemessenen Gaskonzentration mit einer Schwelle oder mit einem vorbestimmten Bereich von Gaskonzentrationen,
- Erfassen (406) der Temperatur,
- Vergleichen (407) der erfassten Temperatur mit dem Zieltemperaturwert und
- Aktivieren (409) von Umgebungssteuermitteln, wenn die erfasste Temperatur um mehr als eine vorbestimmte Fehlerspanne von dem Zieltemperaturwert abweicht, **dadurch gekennzeichnet, dass** das Verfahren ferner umfasst:
- Anpassen (405) des Zieltemperaturwerts, wenn die gemessene Gaskonzentration höher als der Schwellenwert ist oder nicht dem Bereich entspricht, bevor die erfasste Temperatur mit dem Zieltemperaturwert verglichen wird (407).

5. Verfahren nach Anspruch 4, das ferner das Definieren (401) eines Bereichs vorbestimmter Temperaturen umfasst, und wobei das Einstellen (402) des Zieltemperaturwerts das Einstellen (402) des Zieltemperaturwerts auf Grundlage des definierten Bereichs vorbestimmter Temperaturen umfasst.

6. Verfahren nach Anspruch 4 oder 5, das ferner das Erfassen (410) der Feuchtigkeit und das Vergleichen (414) des Feuchtigkeitsniveaus mit einem vorbestimmten Feuchtigkeitsbereich umfasst.

7. Verfahren nach einem der Ansprüche 4 bis 6, ferner umfassend das Starten (411) des Vorgangs, wenn ein Anstieg der Konzentration des vorbestimmten Gases erkannt wird.

8. Verwendung wenigstens eines Gaserfassungsmittels (103, 203, 303) in einem Thermostaten, der wenigstens einen Temperaturerfassungsmittel (102, 202, 302) umfasst, wobei der Thermostat angepasst ist, um einen Zieltemperaturwert, auf den eine Temperatur geregelt werden soll, abzustimmen, wobei das Abstimmen auf der Messung der Gaskonzentration basiert, die durch die Gaserfassungsmittel (103, 203, 303) erhalten wird, die wenigstens einen Kohlendioxidsensor und/oder einen VOC-Sensor umfassen.

## Revendications

1. Contrôleur de température (100, 200, 300) comprenant un régulateur de température (101) et des moyens de détection de température (102, 202, 302), le régulateur de température (101) étant un régulateur réglable pour ajuster une valeur de température prédéterminée, le régulateur de température étant adapté pour réguler la température à un emplacement vers une valeur de température cible en tenant compte de la valeur de la température détectée par les moyens de détection de température (102, 202, 302), le contrôleur de température comprenant des moyens de détection supplémentaires (103, 203, 303) pour la détection de gaz comprenant au moins un d'un capteur de dioxyde de carbone, et/ou d'un capteur de COV, **caractérisé en ce que** le régulateur de température (101) est en outre adapté pour régler la valeur de température prédéterminée à la valeur de température cible conformément à la sortie des moyens de détection supplémentaires (103, 203, 303) pour la détection de gaz.

2. Contrôleur de température selon l'une quelconque des revendications précédentes, comprenant en outre des moyens de détection d'humidité (105), le régulateur de température (101) étant en outre adapté pour régler la valeur de température cible conformément à la sortie des moyens de détection d'humidité (105).

3. Système de climatisation d'ambiance (400) comprenant un contrôleur de température (100, 200, 300) selon l'une quelconque des revendications précédentes, comprenant en outre des moyens de contrôle environnemental (310, 311, 312).

4. Procédé de contrôle d'une condition environnementale à un emplacement, le procédé comprenant
- l'ajustement (402) d'une valeur de température prédéterminée, et la fixation d'une valeur de température cible sur la base de la valeur de température prédéterminée
- la mesure (403) d'une concentration d'un gaz prédéterminé qui est le dioxyde de carbone ou le COV,
- la comparaison (404) de la concentration de gaz mesurée avec un seuil ou avec une plage prédéterminée de concentrations de gaz,
- la détection (406) de la température,
- la comparaison (407) de la température détectée avec la valeur de température cible, et
- l'activation (409) de moyens de contrôle environnemental si la température détectée diffère de plus d'une marge d'erreur prédéterminée de la valeur de température cible, **caractérisé en ce que** le procédé comprend en outre :
- l'adaptation (405) de la valeur de température cible si la concentration de gaz mesurée est supérieure à la valeur de seuil ou non conforme à la plage avant la comparaison (407) de la température détectée avec la valeur de température cible.

5. Procédé selon la revendication 4, comprenant en outre la définition (401) d'une plage de températures prédéterminées, et dans lequel l'ajustement (402) de la valeur de température cible comprend l'ajustement (402) de la valeur de température cible sur la base de la plage définie de températures prédéterminées.

6. Procédé selon les revendications 4 ou 5, comprenant en outre la détection (410) de l'humidité et la comparaison (414) du niveau d'humidité avec une plage d'humidité prédéterminée.

7. Procédé selon l'une quelconque des revendications 4 à 6, comprenant en outre le démarrage (411) du processus lorsqu'une augmentation de la concentration du gaz prédéterminé est détectée.

8. Utilisation d'au moins un moyen de détection de gaz (103, 203, 303) dans un thermostat comprenant au moins un moyen de détection de température (102, 202, 302), le thermostat étant adapté pour régler une valeur de température cible à laquelle une température doit être régulée, le réglage étant basé sur la mesure de la concentration de gaz obtenue par les moyens de détection de gaz (103, 203, 303) comprenant au moins un d'un capteur de dioxyde de carbone, et/ou d'un capteur de COV.
